# EUROPÄISCHE PATENTANMELDUNG

(11) **EP 0 686 546 A1**
(43) Veröffentlichungstag der Anmeldung: **13.12.1995**
(21) Anmeldenummer: 95107773.4
(22) Anmeldetag: 22.05.1995
(51) Int. Cl.: B62H 3/12, B62H 3/08

(54) **Fahrradständer**

(30) Priorität: 09.06.1994 DE 4420174
(71) Anmelder: Väth, Bruno, D-90480 Nürnberg (DE)
(72) Erfinder: Väth, Bruno, D-90480 Nürnberg (DE); Mulansky, Frank, D-90518 Altdorf (DE)
(74) Vertreter: LOUIS, PÖHLAU, LOHRENTZ & SEGETH

(57) **Zusammenfassung**

Es wird ein Fahrradständer (10) mit rinnenförmigen Führungen (30, 32) beschrieben, die an einer Basiseinrichtung (24) schräg nach oben geneigt und voneinander beabstandet vorgesehen sind. Jeder rinnenförmigen Führung (30, 32) ist ein an der Basiseinrichtung (24) vorgesehenes Hakenelement (58) zugeordnet, das an der Basiseinrichtung (24) höhenverstellbar vorgesehen ist. Auf diese Weise ist es mit Hilfe des Hakenelementes (58) möglich, das entsprechende Fahrrad (62) vorzugsweise mit seinem Vorderrad (60) an der zugehörigen Führung (30, 32) hochzubewegen, bis auch das Hinterrad (68) des entsprechenden Fahrrades (62) in der Führung (30, 32) ruht.

## Beschreibung

Die Erfindung betrifft einen Fahrradständer mit rinnenförmigen Führungen, die an einer Basiseinrichtung schräg nach oben geneigt und voneinander beabstandet vorgesehen sind, wobei jeder rinnenförmigen Führung ein an der Basiseinrichtung vorgesehenes Hakenelement zugeordnet ist.

Ein derartiger Fahrradständer ist aus der DE 24 58 502 B2 und aus der DE 74 41 170 U1 bekannt.

Während bei dem Fahrradständer gemäß der zuletzt genannten DE 74 41 170 U1 die Hakenelemente ortsfest angeordnet sind, so daß es erforderlich ist, ein in den Fahrradständer einzuparkendes Fahrrad mit seinem Vorderrad bis zum hochgelegenen Hakenelement hochzuheben, was einen nicht zu vernachlässigenden Kraftaufwand darstellt, und was insbes. dann zu nicht zu vernachlässigenden Problemen führen kann, wenn im Fahrradständer bereits eine entsprechende Anzahl Fahrräder geparkt sind, ist aus der zuerst genannten DE 24 58 502 B2 außer einem derartigen Fahrradständer mit 58 502 B2 außer einem derartigen Fahrradständer mit ortsfest vorgesehenen Hakenelementen auch ein Fahrradständer bekannt, bei dem die Hakenelemente an der Basiseinrichtung höhenverstellbar vorgesehen sind. Hier wird die Höhenverstellung der Hakenelemente jedoch durch Gasfedern bewirkt, wobei jedem Hakenelement eine eigene Gasfeder zugeordnet ist. Das bedingt einen erheblichen konstruktiven Aufwand, der sich auf die Herstellungskosten eines solchen Fahrradständers entsprechend auswirkt. Außerdem ist bei diesem bekannten Fahrradständer der zuletzt genannten Art mit höhenverstellbaren Hakenelementen ein großer Grundflächenbedarf gegeben, weil die Tragarme, an welchen die Hakenelemente vorgesehen sind, zwischen einer horizontalen Fahrrad-Aufnahmestellung, in welcher der große Platzbedarf gegeben ist, und einer vertikalen Parkposition verstellbar sind.

Die DE 41 19 403 C2 beschreibt einen Fahrradständer, bei dem an einer vertikalen Führungsschiene eine Halteeinrichtung linear höhenverstellbar vorgesehen ist, die zum Aufnehmen des Vorderrades eines einzuparkenden Fahrrades dient. Zur höhenverstellbaren Anordnung ist die Halteeinrichtung mit Laufrollen versehen. Die Höhenverstellung der Halteeinrichtung erfolgt dort mittels eines Seilzeuges, der über Umlenkrollen umgelenkt ist. Zur Begrenzung der seitlichen, d.h. der Schwenkbeweglichkeit der Halteeinrichtung ist die vertikale Führungsschiene geeignet ausgebildet. Das heißt, die seitliche Schwenkbewegung eines einzuparkenden Fahrrades wird in erster Linie duch geeignete Ausbildung der Halteeinrichtung mit seitlichen Bügelteilen und diese bogenförmig überspannende Seitenteile sowie durch die Lagerrollen in Verbindung mit einer ganz bestimmten Profilierung der vertikalen Führungsschiene erreicht. Das bedeutet jedoch, daß die Halteeinrichtung mit einem einfachen Hakenelement, wie es bei dem erfindungsgemäßen Fahrradständer zur Anwendung gelangt, nicht vergleichbar ist. Außerdem wird bei diesem bekannten Fahrradständer die Halteeinrichtung an der vertikalen Führungseinrichtung senkrecht hochgeschoben, d.h. am Seilzug ist die Summe der Gewichte der Halteeinrichtung und des einzuparkenden Fahrrades wirksam. Um an dem von der Halteeinrichtung entfernten Betätigungsende des Seilzuges nicht mit einer entsprechend großen Kraft anziehen zu müssen, ist dort der Seilzug nach dem Prinzip der losen Rolle gestaltet. Am Betätigungsende muß folglich nur mit der halben Gesamtkraft gezogen werden. Nach dem Hebelgesetz bedeutet das jedoch, daß der Betätigungsweg, d.h. die Strecke, entlang welcher das Betätigungsende des Seilzuges gezogen werden muß, um das Fahrrad mit seinem Vorderrad an der vertikalen Führungsschiene hochzubewegen, doppelt so lang sein muß, wie die Hochbewegstrecke. Das ist nicht nur umständlich, sondern es ist außerdem notwendig, das Betätigungsende des Seilzuges in der normalen Nichtgebrauchsstellung des Fahrradständers möglichst hoch vorzusehen. Der Zugang zu einem solchen hoch vorgesehenen Betätigungsende des Seilzuges läßt jedoch zunmindest Wünsche offen bzw. ist insbes. dann nicht realisierbar, wenn vorgesehen wäre, diesen Fahrradständer karussellartig entsprechend dem eingangs abgehandelten Stand der Technik zu gestalten.

Aus der DE 92 04 966 U1 ist ein Fahrradständer bekannt, bei welchem eine Längsführung mittels eines flexiblen Verbindungselementes, das mit einem Rücksteller verbunden ist, von einer Fahrrad-Einparkstellung in eine Fahrrad-Aufbewahrungsstellung verstellbar ist. Die besagte Längsführung weist eine der Länge des Fahrrades entsprechende Länge auf, was einen entsprechenden Platzbedarf für den Fahrradständer darstellt. Außerdem ist es hier notwendig, das Gewicht eines einzuparkenden Fahrrades sowie das Gewicht der genannten Längsführung zu überwinden, um ein Fahrrad ein- bzw. hochparken zu können. Ein mechanischer Bruch des flexiblen Verbindungselementes und/oder des Rückstellers führt dort zu einem Absturz des hochgeparkten Fahrrades, was unter Sicherheitsgesichtspunkten einen wesentlichen Mangel darstellt.

Die DE 92 07 641 U1 zeigt eine Zweiradabstellanlage, die liftartig ausgebildet ist. In der Fig. 7 ist dort eine Ausbildung einer solchen Liftanlage verdeutlicht, bei der mittels einer Handkurbel ein Seilzug mit Zugseilen betätigbar ist. An den Zugseilen sind Hakenelemente vorgesehen, die am Lenker und am Sattel eines hochzuhebenden Fahrrades festgelegt werden. Nach dem Festlegen der beiden Hakenelemente werden die beiden zugehörigen Zugseile und somit das festgehakte Fahrrad mit Hilfe der Handkurbel in eine Parkposition hochbewegt. Um den Kraftaufwand beim Hochbewegen entsprechend klein zu halten, ist es dort notwendig, die Handkurbel mit einem Getriebe auszubilden. Die Kraftreduktion geht auch hier auf Kosten des Betätigungsweges, d.h. auf Kosten der Anzahl Umdrehungen der Handkurbel, was unter dem Gesichtspunkt des Bedienungskomforts einen Mangel darstellt. Außerdem sind bestimmte Sicherungen erforderlich, durch die ein ungewolltes Herunterfallen eines hochgeparkten Fahrrades verhindert werden soll. Diese Sicherungen stellen einen nicht zu vernachlässigenden Bau- bzw. Konstruktionsaufwand dar.

Aus der DE-PS 475 360 ist ein Fahrradständer mit nebeneinander angeordneten, schräggestellten Tragschienen bekannt, wobei die Neigungswinkel der aufeinanderfolgenden Tragschienen in ihrer Größe abwechseln und ihre Scheitelpunkte in einer geraden, waagrecht verlaufenden Linie liegen.

Ein abschließbares Fahrradhaus ist aus der DE 92 17 562 U1 bekannt. Es ist vorzugsweise als Zwölfeck-Rundhaus ausgebildet, in welchem eine Vertikalachse drehbar angeordnet ist, von der Haltevorrichtungen wegstehen, die mit Haltemitteln versehen sind. Die Haltemittel können als Haken ausgebildet sein, die zum Einhängen eines Rades des jeweils einzuparkenden Fahrrades dienen. Die Haken sind in der Höhe voneinander unabhängig verstellbar. Wie dies geschehen soll, dazu macht diese Druckschrift keine Ausführungen.

Der Erfindung liegt die Aufgabe zugrunde, einen Fahrradständer der eingangs genannten Art zu schaffen, mit welchem es einfach und kraftsparend möglich ist, ein Fahrrad in eine der schräg nach oben geneigten Führungen des Fahrradständers einzuparken, und welcher einen vergleichsweise kleinen Platzbedarf besitzt.

Diese Aufgabe wird bei einem Fahrradständer der eingangs genannten Art erfindungsgemäß durch die Merkmale des Kennzeichenteiles des Anspruchs 1 gelöst. Bevorzugte Aus- und Weiterbildungen des erfindungsgemäßen Fahrradständers sind in den Unteransprüchen gekennzeichnet.

Dadurch, daß das jeweilige Hakenelement an einem Seilzug angeordnet ist, der um mindestens eine Rolle umgelenkt ist, die an der Basiseinrichtung über der zugehörigen rinnenförmigen Führung vorgesehen ist, ergibt sich der Vorteil eines vergleichsweise einfachen und unkomplizierten Aufbaus des erfindungsgemäßen Fahrradständers. Dadurch, daß erfindungsgemäß die Basiseinrichtung eine von einer Grundplatte vertikal nach oben stehende und relativ zur Grundplatte verdrehbare Drehachse, ein vom unteren Endabschnitt der Drehachse wegstehendes Unterteil und ein vom oberen Endabschnitt der Drehachse wegstehendes Oberteil aufweist, wobei die rinnenförmigen Führungen zwischen der Drehachse und dem Unterteil angeordnet sind, ergibt sich ein platzsparend ausgebildeter Fahrradständer.

Jeder Seilzug weist vorzugsweise eine solche Gesamtlänge auf, daß das Hakenelement z.B. in das Vorderrad des einzuparkenden Fahrrades eingehakt werden kann, wenn das besagte Vorderrad bspw. im bogenförmig gekrümmten unteren Endabschnitt der entsprechenden Führung ruht. Der vom Hakenelement entfernte zweite Endabschnitt des um die mindestens einen Rolle umgelenkten Seilzuges kann dann vom Fahrradständer entsprechend beabstandet werden, so daß die das Fahrrad in den Fahrradständer einparkende Person neben dem Fahrradständer stehen und den Seilzug bedienen kann. Durch Anziehen am zweiten Endabschnitt des Seilzuges kann das Fahrrad an der entsprechenden schräg nach oben geneigten Führung kraftsparend hochbewegt werden, bis es mit seinem Hinterrad im bogenförmig gekrümmten unteren Endabschnitt der Führung ruht. Danach kann der zweite Endabschnitt des Seilzuges dann bspw. über die Lenkstange des Fahrrades und um die Sattelstutze geschlungen werden, um von dort bspw. wieder zur Lenkstange zurückbewegt und an der Lenkstange festgelegt zu werden. Auf diese Weise ist es möglich, das eingeparkte Fahrrad nicht nur durch das Hakenelement sondern durch den Seilzug insgesamt am Fahrradständer einfach und zeitsparend festzulegen.

Um den Seilzug einfach und zeitsparend bspw. an der Lenkstange, an der Lenkstangenlagerung o.dgl. festlegen zu können, ist es vorteilhaft, wenn jeder Seilzug an seinem vom Hakenelement entfernten Endabschnitt mit einem Befestigungsorgan versehen ist. Dieses Befestigungsorgan kann hakenförmig ausgebildet sein.

Zweckmäßig ist es, wenn der jeweilige Seilzug um zwei am Oberteil der Basiseinrichtung voneinander beabstandet gelagerte Rollen umgelenkt ist. Dabei sind die Rollen einfach nur zur Richtungsänderung der Kraftwirkung vorgesehen, so daß ein guter Bedienungskomfort gewährleistet wird.

Damit der Fahrradständer für Räder unterschiedlicher Größe gleich gut geeignet ist, ist es zweckmäßig, wenn jeder Seilzug einen elastischen Seilzugabschnitt aufweist, weil es dann durch entsprechende Dehnung möglich ist, den jeweiligen Seilzug an das einzuparkende Fahrrad anzupassen. Außerdem wird durch den elastischen Seilzugabschnitt der ein in den Fahrradständer eingeparktes Fahrrad haltende Seilzug jederzeit in einem gespannten Zustand gehalten, der durch geeignete Seilzugführung dann gleichzeitig eine zuverlässige Halterung des in den Fahrradständer eingeparkten Fahrrades bewirkt.

Das Ober- und das Unterteil der Basiseinrichtung des erfindungsgemäßen Fahrradständers weisen vorzugsweise einen kreisförmigen Umfangsrand auf, durch deren Zentrum sich die vertikale Drehachse erstreckt. Das Unterteil und das Oberteil können hierbei scheibenförmig oder vorzugsweise als Ringe mit Speichen ausgebildet sein, wobei die Speichen an der vertikalen Drehachse befestigt sind. Hierdurch ist eine Gewichtsreduktion möglich. Die rinnenförmigen Führungen sind am Unterteil, d.h. am kreisrunden Reifen des Unterteils, vorzugsweise äquidistant angeordnet.

Der erfindungsgemäße Fahrradständer ist also nach Art eines Karussells ausgebildet, er weist in vorteilhafter Weise einen kleinen Grundflächenbedarf auf, so daß er nicht nur im Freien sondern bspw. auch in einem Kellerraum o.dgl. unterbringbar ist.

Die zu den rinnenförmigen Führungen zugehörigen Rollen für die entsprechenden Seilzüge sind zweckmäßigerweise am Oberteil der Basiseinrichtung gelagert. Ist das Oberteil als Reifen mit Speichen ausgebildet, so können die Rollen an den Speichen vorgesehen sein, wenn die Anzahl Speichen der Anzahl rinnenförmiger Führungen entspricht.

Um bei einem derartigen karussellartigen Fahrradständer eine Anzahl Fahrräder sehr platzsparend einparken, d.h. unterbringen zu können, ist es vorteilhaft, wenn - wie bereits erwähnt worden ist - das Unterteil und das Oberteil kreisrund ausgebildet sind, und wenn außerdem die rinnenförmigen Führungen abwechselnd mit unterschiedlichen Längen ausgebildet sind, so daß sie abwechselnd gegen die zentrale Drehachse unterschiedlich nach oben geneigt sind. Auf diese Weise sind die zueinander benachbarten in den Fahrradständer eingeparkten Fahrräder in bezug auf die vertikale Drehachse abwechselnd unterschiedlich geneigt, so daß sich weder die Lenkstangen noch die Pedale benachbarter Fahrräder gegenseitig behindern. Hierdurch ist es also in vorteilhafter Weise möglich, Räder eng benachbart nebeneinander in den erfindungsgemäßen karussellartigen Fahrradständer einzuparken.

Um während des Einparkens eines Fahrrades in den karussellartigen Fahrradständer eine ungewollte Verdrehung desselben in bezug auf die Grundplatte zu verhindern, ist es vorteilhaft, wenn zwischen der Grundplatte und der Basiseinrichtung des Fahrradständers Rast- bzw. Halteeinrichtung vorgesehen ist. Diese Rast- bzw. Halteeinrichtung kann bspw. einen zur Drehachse konzentrischen Kranz mit voneinander äquidistant beabstandeten Aussparungen oder Löchern und ein in diese Aussparungen bzw. Löcher einrastendes Rastorgan aufweisen. Dieses Rastorgan kann hierbei derartig federnd ausgebildet sein, daß sich wohl eine Verrastung bzw. Halterung der karussellartigen Basiseinrichtung in bezug auf die Grundplatte ergibt, daß diese Halterung jedoch ohne größeren Kraftaufwand auch wieder aufgehoben werden kann, um die Basiseinrichtung um die vertikale Drehachse wunschgemäß verdrehen zu können, um eine nicht von einem Fahrrad besetzte rinnenförmige Führung an einen gewünschten Standort herzudrehen.

Bei dem erfindungsgemäßen Fahrradständer kann die von der Grundplatte vertikal nach oben stehende Drehachse oberseitig bspw. an einer Decke eines Raumes festgelegt werden, wenn der Fahrradständer in dem besagten Raum, bei dem es sich z.B. um einen Kellerraum handelt, angeordnet wird. Ist der erfindungsgemäße Fahrradständer jedoch zur Aufstellung im Freien vorgesehen, so kann es zweckmäßig sein, wenn auf der Grundplatte ein die Basiseinrichtung umschließendes Gehäuse angeordnet ist. Dieses Gehäuse kann eine zylindrische Mantelfläche, eine regelmäßig mehreckige Zylinderfläche oder beliebig anders gestaltet sein. Bei einem solchen mit einem Gehäuse ausgebildeten Fahrradständer kann es desweiteren zweckmäßig sein, das Gehäuse mit einer Türe zu versehen, die ein Schloß aufweisen kann, so daß es möglich ist, den Fahrradständer abzusperren und auf diese Weise die in ihm geparkten Fahrräder gegen Diebstahl zu sichern.

Weitere Einzelheiten, Merkmale und Vorteile ergeben sich aus der nachfolgenden Beschreibung eines in der Zeichnung schematisch dargestellten Ausführungsbeispieles des erfindungsgemäßen Fahrradständers, der nach Art eines Karussells ausgebildet und mit einem Gehäuse versehen ist. Es zeigen:
- Fig. 1: eine Ausbildung des Fahrradständers mit halbseitig aufgeschnittenem Gehäuse, und
- Fig. 2: einen Schnitt entlang der Schnittlinie II-II in Fig.1, d.h. einen Schnitt durch die von der Grundplatte vertikal nach oben stehende Drehachse und durch die zwischen der Drehachse und dem Unterteil der Basiseinrichtung angeordneten rinnenförmigen Führungen des Fahrradständers.

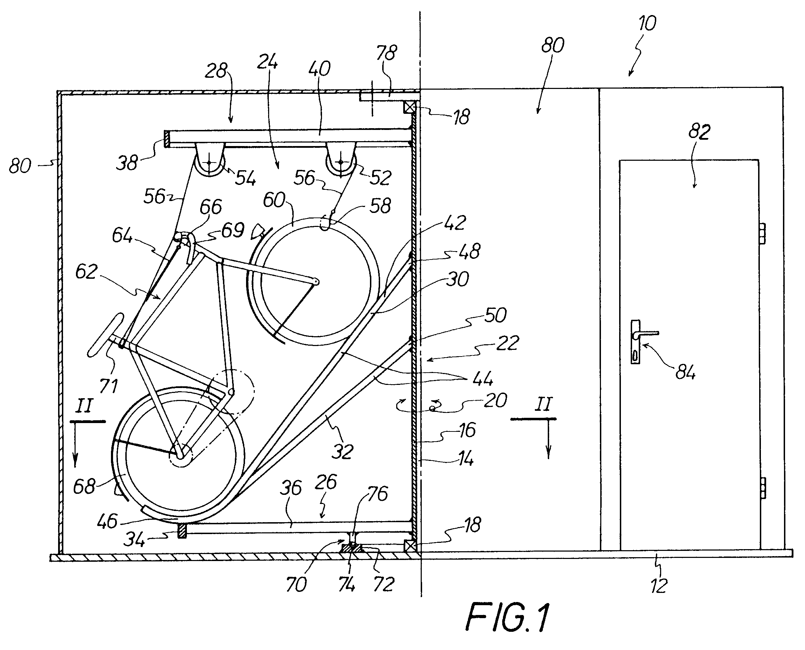

Fig. 1 zeigt halbseitig aufgeschnitten eine Ausbildung des Fahrradständers 10 mit einer Grundplatte 12, von welcher mittig eine Säule 14 vertikal nach oben steht. An der Säule 14 ist eine Hohlwelle 16 mittels mindestens einer Lagereinrichtung 18 drehbar gelagert, was durch den bogenförmigen Doppelpfeil 20 angedeutet ist. Die Säule 14 bildet mit der Hohlwelle 16 also eine Drehachse 22 einer Basiseinrichtung 24, die ein von der Drehachse 22 wegstehendes Unterteil 26 und ein von der Drehachse 22 wegstehendes Oberteil 28 sowie eine Anzahl rinnenförmige Führungen 30 und 32 mit unterschiedlichen Längen aufweist.

Die rinnenförmigen Führungen 32 sind jeweils kürzer als die rinnenförmigen Führungen 30, wie aus Fig. 1 ohne weiteres ersichtlich ist.

Das Unterteil 26 der Basiseinrichtung 24 weist einen kreisrunden Ring 34 auf, der mittels Speichen 36 mit der Hohlwelle 16 der Drehachse 22 verbunden ist. Entsprechend ist das Oberteil 28 der Basiseinrichtung 24 mit einem Ring 38 ausgebildet, der mittels Speichen 40 mit der Hohlwelle 16 der Drehachse 22 verbunden ist. Bspw. sind vier Speichen 36 vorgesehen, die von der Hohlwelle 16 gleichwinkelig verteilt radial wegstehen. Wenn der karussellartige Fahrradständer 10 bspw. abwechselnd sechs lange rinnenförmige Führungen 30 und sechs kurze rinnenförmige Führungen 32, d.h. insgesamt 12 rinnenförmige Führungen 30, 32 aufweist, so ist es bevorzugt, das Oberteil 28 entsprechend mit zwölf Speichen 40 auszubilden, um jeder der rinnenförmigen Führungen 30, 32 eine Speiche 40 zuzuordnen.

Die nach oben offenen rinnenförmigen Führungen 30 und 32 weisen einen geradlinig verlaufenden Führungsabschnitt 42 bzw. 44 auf, an den sich jeweils ein nach oben offener bogenförmig gekrümmter unterer Endabschnitt 46 anschließt. Die bogenförmig gekrümmten Endabschnitte 46 sind am Ring 34 des Unterteiles 26 der Basiseinrichtung 24 befestigt, sie sind voneinander äquidistant beabstandet. Die geradlinig verlaufenden Führungsabschnitte 42 bzw. 44 sind mit ihrem jeweiligen Vorderende 48 bzw. 50 an der Hohlwelle 16 der Drehachse 22 fixiert.

Am Oberteil 28 bzw. an den Speichen 40 des Oberteils 28 sind jeweils zwei Rollen 52 und 54 gelagert, um welche ein zugehöriger Seilzug 56 gewunden ist. Am einen Ende des Seilzugs 56 ist ein Hakenelement 58 befestigt, das zum Einhaken vorzugsweise an einem Vorderrad 60 eines einzuparkenden Fahrrades 62 vorgesehen ist. An dem vom Hakenelement 58 entfernten zweiten Endabschnitt ist jeder Seilzug 56 mit einem elastischen Seilzugabschnitt 64 versehen, an dessen freiem Ende ein Befestigungsorgan 66 fixiert ist. Das Befestigungsorgan 66 kann ebenfalls hakenförmig ausgebildet sein.

Der Seilzug 56 wird mit dem Hakenelement 58 - wie bereits ausgeführt worden ist - am Vorderrad 60 des in den karussellartigen Fahrradständer 10 einzuparkenden Fahrrades 62 festgelegt. Dann wird das einzuparkende Fahrrad 62 an der rinnenförmigen Führung 30 oder 32 hochbewegt, indem am Seilzug 56 nach unten gezogen wird. Sobald das einzuparkende Fahrrad 62 mit seinem Hinterrad 68 in dem bogenförmig gekrümmten Endabschnitt 46 der rinnenförmigen Führung 30 bzw. 32 ruht, wird der Seilzug 56 bspw. um die Sattelstütze 71 des Fahrrades 62 herumgeschlungen und mit dem Befestigungsorgan 66 am Fahrradrahmen oder an der Lenkstange 69 des Fahrrades 62 festgelegt. Damit das in den Fahrradständer 10 eingeparkte Fahrrad 62 im eingeparkten Zustand an der jeweiligen rinnenförmigen Führung 30 bzw. 32 zuverlässig festgehalten wird, ist es zweckmäßig, wenn die Rollen 52 und 54 von der zentralen Drehachse 22 einen definierten, nicht zu großen Abstand besitzen, damit das eingeparkte Fahrrad 62 mittels des Seilzuges 56 gleichsam gegen die zugehörige rinnenförmige Führung 30 bzw. 32 gehalten wird.

Um eine ungewollte Verdrehung der Basiseinrichtung 24 in bezug auf die Grundplatte 12 insbes. während des Einparkens eines Fahrrades 62 in den karussellartigen Fahrradständer 10 zu verhindern, ist es zweckmäßig, wenn zwischen der Grundplatte 12 und der Basiseinrichtung 24 eine Rast- bzw. Halteeinrichtung 70 vorgesehen ist. Diese Rast- bzw. Halteeinrichtung 70 kann bspw. einen zur Drehachse 22 konzentrischen Ring 72 aufweisen, der an der Grundplatte 12 fixiert ist. Der Ring 72 kann mit voneinander äquidistant beabstandeten Aussparungen 74 ausgebildet sein. Vom Unterteil 26 der Basiseinrichtung 24, d.h. von einer Speiche 36 des Unterteils 26 kann ein federndes Rastorgan 76 nach unten stehen, das jeweils in eine der Aussparungen 74 einrastbar ist.

Am oberen Ende der Säule 14 kann ein Befestigungsflansch 78 fixiert sein, der zur Befestigung des Fahrradständers 10 bspw. an der Decke eines Raumes oder der zur Befestigung eines die drehbare Basiseinrichtung 24 umschließenden Gehäuses 80 dient. Das Gehäuse 80 kann mit einer Türe 82 ausgestattet sein. Die Türe 82 ist zweckmäßigerweise mit einem Türgriff mit Türschloß 84 versehen. Auf diese Weise kann der karussellartige Fahrradständer 10 z.B. bei einer Aufstellung im Freien gegen Diebstahl gesichert werden.

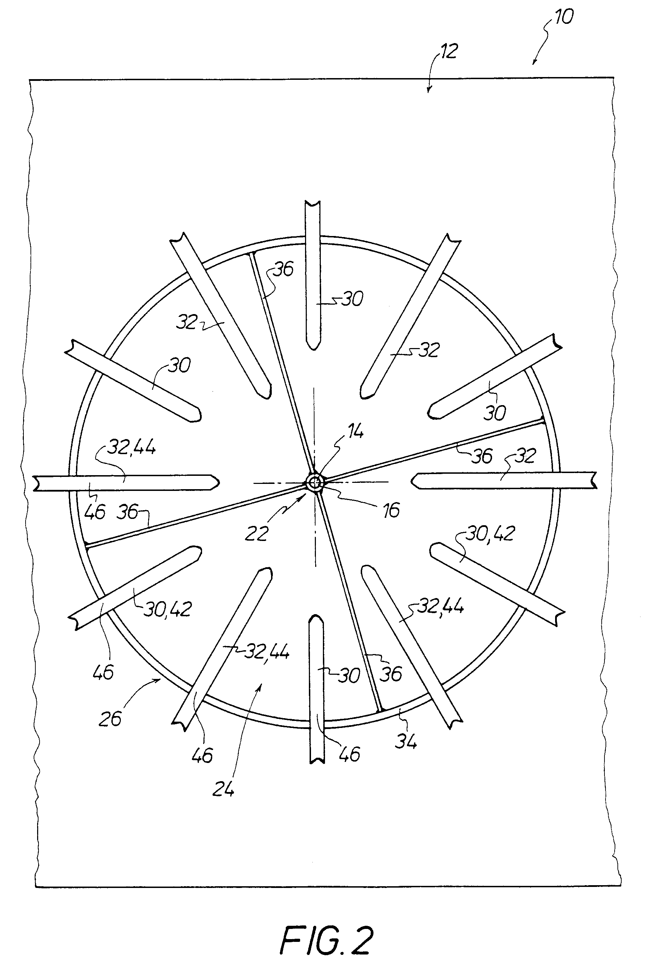

Fig. 2 verdeutlicht abschnittweise die Grundplatte 12 des karussellartigen Fahrradständers 10 mit der vom Zentrum der Grundplatte 12 nach oben stehenden Säule 14 und der an der Säule drehbar gelagerten Hohlwelle 16, von welcher in radialer Richtung die Speichen 36 des Unterteils 26 der um die Drehachse 22 drehbaren Basiseinrichtung 24 wegstehen. Mittels der Speichen 36 ist der Ring 34 des Unterteils 26 mit der Kohlwelle 16 verbunden. Am Ring 34 des Unterteils 26 sind voneinander äquidistant beabstandet die rinnenförmigen Führungen 30 und 32 mit ihrem jeweiligen bogenförmig gekrümmten Endabschnitt 46 befestigt. Aus dieser Zeichnungsfigur wird auch deutlich, daß die rinnenförmigen Führungen 30 und 32 abwechselnd in bezug auf die zentrale Drehachse 22 unterschiedlich geneigt sind, so daß der zur Drehachse senkrechte Schnitt entlang der Schnittlinie II-II in Fig. 1 in Fig. 2 abwechselnd unterschiedlich lange Abschnitte der rinnenförmigen Führungen 30 und 32 zeigt.

## Patentansprüche

1. Fahrradständer mit rinnenförmigen Führungen (30,32), die an einer Basiseinrichtung (24) schräg nach oben geneigt und voneinander beabstandet vorgesehen sind, wobei jeder rinnenförmigen Führung (30, 32) ein an der Basiseinrichtung (24) vorgesehenes Hakenelement (58) zugeordnet ist,
**dadurch gekennzeichnet**,
daß das jeweilige Hakenelement (58) an einem Seilzug (56) angeordnet ist, der um mindestens eine Rolle (52, 54) umgelenkt ist, die an der Basiseinrichtung (24) über der zugehörigen rinnenförmigen Führung (30, 32) derartig vorgesehen ist, daß das jeweilige Hakenelement (58) an der Basiseinrichtung (24) höhenverstellbar ist, so daß das entsprechende Fahrrad (62) mittels des Hakenelementes (58) vorzugsweise mit seinem Vorderrad (60) an der zugehörigen rinnenförmigen Führung (30, 32) hochbewegbar ist, bis auch das Hinterrad (68) des entsprechenden Fahrrades (62) in der Führung (30, 32) ruht, und die Basiseinrichtung (24) eine von einer ruht, und die Basiseinrichtung (24) eine von einer Grundplatte (12) vertikal nach oben stehende und relativ zur Grundplatte (12) verdrehbare Drehachse (22), ein vom unteren Endabschnitt der Drehachse (22) wegstehendes Unterteil (26) und ein vom oberen Endabschnitt der Drehachse (22) wegstehendes Obeerteil (28) aufweist, wobei die rinnenförmigen Führungen (30, 32) zwischen der Drehachse (22) und dem Unterteil (26) angeordnet sind.

2. Fahrradständer nach Anspruch 1,
**dadurch gekennzeichnet,**
daß jeder Seilzug (56) an seinem vom Hakenelement (58) entfernten Endabschnitt mit einem Befestigungsorgan (66) versehen ist.

3. Fahrradständer nach Anspruch 1,
**dadurch gekennzeichnet,**
daß der jeweilige Seilzug (56) um zwei am Oberteil (28) der Basiseinrichtung (24) voneinander beabstandet gelagerten Rollen (52, 54) umgelenkt ist.

4. Fahrradständer nach einem der vorhergehenden Ansprüche,
**dadurch gekennzeichnet,**
daß jeder Seilzug (56) einen elastischen Seilzugabschnitt (64) aufweist.

5. Fahrradständer nach einem der vorhergenden Ansprüche,
**dadurch gekennzeichnet,**
daß das Unterteil (26) und daß das Oberteil (28) kreisrund ausgebildet sind, und daß die rinnenförmigen Führungen (30,32) abwechselnd mit unterschiedlichen Längen ausgebildet sind, so daß sie abwechselnd gegen die zentrale Drehachse (22) unterschiedlich nach oben geneigt sind.

6. Fahrradständer nach einem der vorhergehenden Ansprüche,
**dadurch gekennzeichnet,**
daß zwischen der Grundplatte (12) und der Basiseinrichtung (24) eine eine ungewollte Drehung der Basiseinrichtung (24) verhindernde Rast- bzw. Halteeinrichtung (70) vorgesehen ist.

7. Fahrradständer nach einem der vorhergehenden Ansprüche,
**dadurch gekennzeichnet,**
daß auf der Grundplatte (12) ein die Basiseinrichtung (24) umschließendes Gehäuse (80) angeordnet ist.
